# EUROPÄISCHE PATENTSCHRIFT

(11) **EP 0 257 627 B1**
(45) Veröffentlichungstag und Bekanntmachung des Hinweises auf die Patenterteilung: **13.07.1994**
(21) Anmeldenummer: 87112362.6
(22) Anmeldetag: 26.08.1987
(51) Int. Cl.: A63B 51/00

(54) **Schlägerbespannungscontroller**
Racket stringing controler
Dispositif pour contrôler le cordage de raquettes

(30) Priorität: 29.08.1986 DE 3629529
(43) Veröffentlichungstag der Anmeldung: 02.03.1988
(73) Patentinhaber: Brunner, Adolf, D-79713 Bad Säckingen (DE)
(72) Erfinder: Brunner, Adolf, D-79713 Bad Säckingen (DE)
(74) Vertreter: Termin, Erich

(56) Entgegenhaltungen:
- WO-A-86/01596
- DE-A- 2 916 735
- DE-U- 8 227 860
- US-A- 4 055 999

## Beschreibung

Die Erfindung betrifft ein Gerät zum schnellen erkennen einer Schlägerbespannung, insbesondere Schläger für Ballspiele ohne zusätzliche Einbauten im Schläger selbst.

Übliche Geräte zum erkennen einer Schlägerbespannung werden bisher sehr groß und kompliziert gebaut und sind dadurch für den Gebrauch der Schlägerbesitzer allgemein ungeeignet.

Die Schlägerrahmen werden auf Auflageflächen gelegt und durch Gewichte wird die Bespannungshärte ermittelt.

Dabei sind die Konstruktionen so gehalten, daß durch die Größe und dem Gewicht der Einzelteile der Prüfgeräte und der Prüfgeräte selbst,das Prüfen kleiner Bespannungshärten wie z.B. bei Badminton oder Squash und das prüfen von großen Bespannungshärten wie z.B. beim Tennis in einem Gerät nur schwer und sehr aufwendig realisiert werden können.

Die Handhabung, die Größe und der Preis der Geräte sind nicht dafür geeignet, daß der einzelne Schlägerbesitzer sich diese Produkte zulegen würde oder wird.

Die Schlägerbespannung ist eine der wichtigsten Elemente eines Schlägers.
Die Qualität des spielens, d.h. die kontinuierlich gleichmäßige Spielweise eines Spielers hängt weitgehendst mit von der Güte (z.B. Härte) der Bespannung ab.
Die Möglichkeit die Bespannungshärte selbst zu überprüfen oder eine maßgebliche Veränderung an der Bespannung schnell und sicher festzustellen, ist der Wunsch eines jeden Spielers.

Eine zu harte oder zu weiche Bespannung können z.B. beim Tennis gesundheitliche Schäden verursachen. Der bekannte und von allen Tennisspielern gefürchtete Tennisarm, oder sonstige Muskelschmerzen, können auch die Ursache von veränderten Schlägerbespannungen sein.
Die Tennisschlägerhersteller und andere Schlägerhersteller haben für jeden Schlägertyp die voraussichtlich richtige Bespannungshärte ermittelt und festgelegt.
Darüber hinaus gibt es Spieler, welche zu Ihrer Spielstärke passend eine bestimmte Bespannungshärte wünschen oder brauchen, darum ist auch in diesem Fall eine Abweichung der Bespannungshärte gleichzeitig eine negative Veränderung der Spieleigenschaft.
Deshalb ist es für alle Spieler von größter Wichtigkeit immer wieder die Bespannungshärte selbst sofort und schnell prüfen zu können.
Eine gleichbleibende Bespannungshärte ist mit die Grundlage für ein gleichbleibendes Ballgefühl und eine gleichbleibende Spielstärke.
Darüberhinaus kommt es nach einer Neubespannung von Schlägern innerhalb von mehreren Stunden zu unterschiedlichen Abweichungen, teilweise bis zu 10 % der vorgenommenen Bespannungshärte. Diese Abweichungen sind Materialbedingt unterschiedlich und können bisher von Spielern selbst nicht erkannt werden.

Anstrengungen zur Lösung des Problems der Schlägerbespannungsmessung mit Auswertungsanzeige hat es verschiedentlich gegeben. So wird zum Beispiel in der WO-A- 8 601 596 ein Gerät beschrieben das eine indirekte Bespannungsmessung zum Inhalt hat. Durch die indirekte Messung treten systembedingt Fehler auf und kompliziert die Messung.

Der Erfindung liegt die Aufgabe zu Grunde, einen Bespannungscontroller für Saiten zur Verfügung zu stellen, der gleichzeitig zum Prüfen aller Schlägerbespannungen geeignet ist und darüberhinaus durch seine Größe, Handlichkeit und kostengünstige Konstruktion für jeden Schlägerbesitzer von großem Nutzen ist. Nachträgliche Veränderungen der Bespannungshärten können sofort und immer an jedem Ort geprüft werden und somit unterliegt die Bespannung einer immer vornehmbaren kontrolle.

Die Aufgabe der vorliegenden Erfindung wird gelöst durch eine Vorrichtung zur direkten Messung der Bespannungshärte der Saitenbespannung in einem Rahmen gespannten Saiten eines Ballschlägers, bestehend, aus einem Druckmeßsystem Teil B und einem Wegmeßsystem Teil A,die dadurch gekennzeichnet ist daß zwischen der Auflagefläche des Teils B 22 und der Auflagefläche des Teils A , 10 , durch das Drehen des Drehrades 13 oder bei der Arretierung des Drehrades 13 des Gesamtteiles B , bei vorheriger Verbindung des Bolzens 4 mit dem Aufnahmegewinde 7 , als Funktion der Bespannungshärte ein Druckaufbau erfolgt der auf die Messplatte 8 einwirkt, die beim Zurücklegen einer festen Wegstrecke bis zum Anschlag an Schalter 11 ,einen Signalton auslöst, der das Ende des Messvorgangs anzeigt, wonach die jeweilige Saitenbespannungshärte der Ballschlägerbespannung direkt auf der Skala 2 des Teils B abgelesen wird, indiziert durch eine auf die schlägerbespannungshärte geeichte Feder 18 mit dem Arretierungspin mit Anzeigepfeil 19 .

Der Teil B, als ganzer Messzylinder betrachtet, wird mit dem Verbindungsbolzen (4) durch die Mitte der Saitenbespannung (6) in das Aufnahmeloch (7) des Teiles A eingeführt und mit dem Drehgriff (13) in eine Schraub- oder andere Spannverbindung gebracht.

### Teil - Vorrichtung Messzylinder (B)

Der Teil des Messzylinders (3) ist verschiebbar (gleitbar) in das Teil (1) eingeführt und wird durch die Arretierungsschraube (19), welche sich in dem Schlitz (20) bewegt und mit dem Teil (3) befestigt, arretiert.
Die Spannfeder (Druckfeder 18) drückt die in sich beweglichen Teile (1) und (3) in die Ausgangsposition auseinander, so daß die Arretierungsschraube oder auch Bolzen das Teil (1) und (3) als Einheit zusammenhält.

An dem, über dem Teil (3), beweglichen Teil (1) ist der Verbindungsbolzen (4) verbunden, welcher mitten durch die Feder (18) und dem Teil (3) aus dem Messzylinder ausgeführt wird.
Der Verbindungsbolzen (13) ist beim Austritt aus dem Teil (3) zentrisch situiert.

Je nach eingesetzter Federkraft der Feder (18) ist über die bewegliche Arretierungsschraube (19) beim drücken des Teiles (3) und des Teiles (1) die aufgebrachte Kraft in Kp abzulesen. Dieser Druckvorgang wird durch das ziehen (in Richtung Teil A) des Verbindungsbolzen von Seiten der Vorrichtung (A)und der Auflage des Teiles (B) auf der Schlägerbespannung durchgeführt. Auf der Arretierungsschraube (19) ist ein Ablesepfeil angebracht.

### Teil - Vorrichtung Mess- und Auflagesystem (A)

Das Auflage- und Meßsystem (A) wird mit der Auflagefläche (10) auf der gegenüberliegende Seite der Schlägerbespannungsfläche und des Messzylinders (B) aufgelegt und mit dem Verbindungsbolzen (4) in das Aufnahmeloch (7) eingeführt und mit dem Drehgriff (13) zentrisch verschraubt.

An der Teil- Vorrichtung (A) ist eine Vertiefung (21) angebracht. In dieser Vertiefung ist die Wegmessplatte (8) mit Befestigungsbolzen und Rückstellfeder (12) beweglich am Auflagerad (9) befestigt.
Die Befestigungsbolzen, welche im Teil (A) beweglich geführt und mit der Messplatte (8) fest verbunden sind, arretieren die Messplatte in Richtung Messzylinder (B) und geben die entgegengesetzte Bewegungsrichtung frei.
Am Ende der vorgegebenen Wegstrecke der Messplatte (8) in Richtung des Auflagerades (9) ist ein elektrischer Kontakt (11) angebracht, welcher bei dem Andruck der Messplatte über eine Elektronik (15) ein akustisches Signal auslöst.
Die Energieversorgung des akustischen Signales wird durch die auswechselbare Knopfzelle (14) erreicht.
Durch das anziehen des Messzylinders (B) über den Bolzen (4), verbunden mit dem Drehknopf (13) wird die Auflagefläche (22) auf die Saitenbespannung gezogen.
Die Messung der Bespaunungshärte der Schlägerbespannung erfolgt zwischen dem Durchmesser des Auflagerades (9) und dem Durchmesser der Auflagefläche (22) durch den Aufbau eines Kraftfeldes durch die Feder (18), bedingt durch den Anschraubweg des Bolzens (4) im Drehgriff (13).

Der Durchmesser der Fläche (22) beträgt 7 bis 30 mm, der der Fläche (10) 100 bis 200 mm, ohne auf diese Masse beschränkt zu sein.

Durch den Druckaufbau der Auflagefläche (22) und dem gleichmässigen Gegendruck der Auflagefläche (10) wird innerhalb dieser Fläche die Saitenbespannung auf die Messplatte (8) gedrückt und diese in Richtung elektrischer Schalter (11) bewegt.
Die Feder (18) ist auf die richtig festgelegte Bespannungshärte der Schläger geeicht, sodass über dem vorgegebenen Weg der Messplatte (8) bis zum erreichen des Schalters (11) und zum Signalton ein ganz bestimmter Kraftaufwand und Weg der Feder erforderlich wird, welcher an der Skala (2) ablesbar ist. Dieser Wert gibt die jeweilig vorhandene Bespannungshärte genau ablesbar an.
Durch die zwei voneinander getrennten und aufeinander einwirkenden Systeme A und B, kann die Saitendicke der Schlägerbespannung unberücksichtigt bleiben.
Die Auflagefläche (10) und die Messwegstrecke der zu bewegenden Saitenbespannung, welche auf die Messplatte (8) einwirkt, werden in derselben Vorrichtung (B) vollzogen.
Das heisst, die Auflagefläche (10) und die Messplatte (8) haben gemeinsam immer dieselbe Ausgangsposition, unabhängig von der Seitenstärke der Bespannung.

Vorliegende Erfindung betrifft somit eine Vorrichtung zur Prüfung der Bespannungshärte eines Ballschlägers mit Saitenbespannung auf einem Rahmen, dadurch gekennzeichnet, dass die Vorrichtung aus zwei Teilen besteht, welche im einen Teil aus einem Drucksystem (B) wie in Ausführung B beschrieben, und im anderen Teil ein Wegmesssystem (A) wie in Ausführung A beschrieben wurde, enthält.

Die Vorrichtung ist desweiteren dadurch gekennzeichnet, dass die Auflageflächen des Druckmess-Systems B (22) und des Wegmess-Systems A (10) eine unterschiedlich grosse Auflagefläche besitzen, welche die Messung innerhalb des gesamten Mess-Systems über die Vertiefung (21) und der Messplatte (8), unabhängig von der Schlägergrösse und Bespannungshärte ermöglichen und über ein Signal den gewollten Messwert bekannt geben, welcher an der Skala (2) ablesbar ist.
Durch die Auswechslung der Feder (18) oder des ganzen Messzylinders (B), ist das Messen der Saitenbespannungshärte unterschiedlicher Schläger, für die verschiedenen Sportarten möglich.

Die Messplatte (8) befindet sich in einer Vertiefung der Auflagefläche (10). Die Vorrichtung ist modifizierbar. Dadurch, dass im Teil A das Drehrad (13) arretiert wird oder ganz entfällt, wonach der Messzylinder B gesamthaft als Schraubdreheinheit verwendet wird, welche in einem feststehenden Gewinde im Teil A aufgenommen wird und somit die Funktion des Drehrades (13) erfüllt, wird eine andere Ausführungsvariante erhalten. Die Vorrichtung kann anstelle einer elektrisch-akustischen Signalgebung, eine mechanische Klickvorrichtung zur Messwertermittlung enthalten. In der Vorrichtung kann anstelle der Feder (18) oder in Kombination mit der Feder, ein Baustein verwendet werden, welcher durch den durch die Bespannungsmessung ausgelösten Druck elektronische Messungen zulässt, welche über entsprechende bekannte elektronische Anzeigen die Messwerte übermittelt.
Anstelle der Schraubzugverbindung zum Drehrad (13) kann ein Kipphebelzugsystem Verwendung finden, welches auf den Zugbolzen (4) wirkt.
Anstelle der Schraubzugverbindung kann ein Magnet die Funktion des Schraubdrehsystems zwischen A und B ausfüllen.
Variante der Vorrichtung, dass in Verbindung mit dem veränderlichen Federweg der Feder (18) ein veränderbarer, elektrischer Widerstand Verwendung findet, der durch eine elektronische Analog- oder Digitalanzeige die Druckverhältnisse und somit die Schlägerbespannungshärte anzeigt.

Die Erfindung stellt einen ausserordentlichen technischen Fortschritt dar, da nun mittels einem einfachen und billigen Gerät die Schlägerbespannung für Schlägerballspiele und insbesondere im Tennisspiel, einfach, schnell und von jedem Amateur oder Profi gemessen werden kann.
Dies ermöglicht den Austausch des Schlägers oder der Bespannung für jeden individuell und zum richtigen Zeitpunkt.

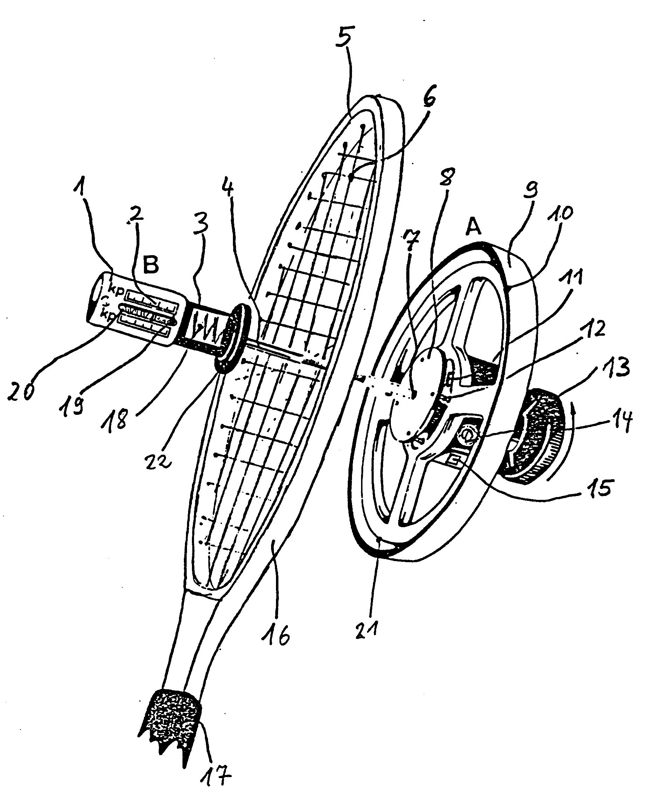

## Patentansprüche

1. Vorrichtung zur direkten Messung der Bespannungshärte der Saitenbespannung in einem Rahmen gespannten Saiten eines Ballschlägers, bestehend, aus einem Druckmeßsystem Teil (B) und einem Wegmeßsystem Teil (A), dadurch gekennzeichnet, daß zwischen der Auflagefläche des Teils (B) (22) und der Auflagefläche des Teils (A) (10), durch das Drehen des Drehrades (13) oder bei der
Arretierung des Drehrades (13) des Gesamtteiles (B), bei vorheriger Verbindung des Bolzens (4) mit dem Aufnahmegewinde (7), als Funktion der Bespannungshärte ein Druckaufbau erfolgt der auf die Messplatte (8) einwirkt, die beim Zurücklegen einer festen Wegstrecke bis zum Anschlag an Schalter (11),einen Signalton auslöst, der das Ende des Messvorgangs anzeigt, wonach die jeweilige Saitenbespannungshärte der Ballschlägerbespannung direkt auf der Skala (2) des Teils (B) abgelesen wird, indiziert durch eine auf die schlägerbespannungshärte geeichte Feder (18) mit dem Arretierungspin mit Anzeigepfeil (19).

2. Vorrichtung gemäss Anspruch 1, dadurch gekennzeichnet, dass die Auflageflächen des Druckmess-Systems B (22) und des Wegmess-Systems A (10) eine unterschiedlich grosse Auflagefläche besitzen, welche die Messung innerhalb des gesamten Mess-Systems über die Vertiefung (21) und der Messplatte (8), unabhängig von der Schlägergrösse und Bespannungshärte ermöglichen und über ein Signal den gewollten Messwert bekannt geben, welcher an der Skala (2) ablesbar ist.

3. Vorrichtung nach Anspruch 1, dadurch gekennzeichnet, dass durch die Auswechslung der Feder (18) oder des ganzen Messzylinders (B), das Messen der Saitenbespannungshärte unterschiedlicher Schläger, für die verschiedenen Sportarten möglich ist

4. Vorrichtung nach Anspruch 1, dadurch gekennzeichnet, dass sich die Messplatte (8) in einer Vertiefung der Auflagefläche (10) befindet.

5. Vorrichtung nach Anspruch 1 und 2, dadurch gekennzeichnet,, dass im Teil A das Drehrad (13) arretiert wird oder ganz entfällt, wonach der Messzylinder B gesamthaft als Schraubdreheinheit verwendet wird,welche in einem feststehenden Gewinde im Teil A aufgenomen wird und somit die Funktion des Drehrades (13) erfüllt.

6. Vorrichtung nach Anspruch 1 und 2 dadurch gekennzeichnet,dass an Stelle einer elektrisch-akustischen Signalgebung, eine mechanische Klickvorrichtung zur Messwertermittlung angebracht ist.

7. Vorrichtung gemäss Anspruch 1, dadurch gekennzeichnet, dass anstelle der Feder (18) oder in Kombination mit der Feder, ein Baustein verwendet wird welcher durch den durch die Bespannungsmessung ausgelösten Druck elektronische Messungen zulässt, welche über entsprechende bekannte elektronische Anzeigen die Messwerte übermittelt.

8. Vorrichtung gemäss Anspruch 1, dadurch gekennzeichnet, dass anstelle der Schraubzugverbindung zum Drehrad (13), ein Kipphebelzugsystem verwendung findet, welches auf den Zugbolzen (4) wirkt.

9. Vorrichtung nach den Ansprüchen 1 und 8, dadurch gekennzeichnet, dass anstelle der Schraubzugverbindung, wie in Anspruch 8, ein Magnet die Funktion des Schraubdrehzugsystems zwischen A und B übernimmt.

10. Vorrichtung nach den Ansprüchen 1 bis 9, dadurch gekennzeichnet, dass in Verbindung mit dem veränderlichen Federweg der Feder (18) ein veränderbarer elektrischer Widerstand Verwendung findet und durch eine elektronische Analog- oder Digitalanzeige die Druckverhältnisse und somit die Schlägerbespannungshärte anzeigt.

## Claims

1. Device for directly measuring the tension of the stringing in a ball-hitting frame, comprising a pressure measuring instrumental system part (B) and a distance measuring instrumental system part (A) being charakterized in that, as a function of the tension, after prior mating of bolt (4) with receiving thread (7), a pressure increase occurs between the bearing surface of part (B) (22) and the bearing surface of part (A) (10) as result of rotating turn wheel (13) or, when turn wheel (13) is locked, the entire part (B), said pressure increase acting on the measurement plate (8), which triggers an audible signs after traveling a fixed path up to a stop at switch (11), said signal indicating the end of the measurement procedure, after which the existing tension of the ball-hitting racket stringing is read directly on scale (2) of part (B) as indicated by spring (18), calibrated for the racket stringing tension with the locking pin with arrow pointer (19).

2. Device according to claim 1, characterized in that the bearing surfaces of the pressure measurment sytem (B) (22) and the travel measurment system (A) (10) have different bearing area sizes, enabling measurment within the entire measurment system by way of depression (21) and measurment plate (8), independently of racquet size and stringing tension, and announcing by means of a signal the desired measurment result, which is readable on scale (2).

3. Device of claim 1, wherein it enables the measurement of the stringing hardness of different rackets for various games by changing the spring (18) or the whole measuring cylinder (B).

4. Device of claim 1, wherein the the measuring plate (8) is situated within the recess of the supportface (10).

5. The device of claim 1 and 2, is distinguished by enabling the locking of or leaving out of the spindle (13), whereby measuring cylinder (B) as a whole is used as screwing unit, which is drawn into part (A) by a fixed thread thereby eliminating the function of the spindle (13).

6. Device of claim 1 and 2 , wherein the possibility exist of using a mechanical clicking signal instead of an electro-acoustical signal.

7. Device of claim 1 and 2, wherein the possibility exist of using a component instead of or in conjunction with the Spring (18), which allows electronic measurment of the stringing pressure and which can transmit the measured values throug appropiate electronic indicators.

8. Device of claim 1, distinguished by the possibility of using a system of levers instead of the srew connection to the spindle (13) which acts on the tension bolt (4).

9. Device of claim 1 and 8, distingushished by the possibility of using a magnet for the function of screw-tensioning device between (A) and (B) as in claim 8, instead of the screw connection.

10. Device of claims 1 to 9 , wherein it exist the possibility of using a variable electrical resistance in conjunction with the variable travel of spring (18) which indicates the pressure and thereby the stringing hardness by means of an electronic analogue or digital indicator.

## Revendications

1. Dispositif pour la mesure directe du degré de tension du cordage d'une raquette, comprenant un système de mesure de la pression partie (B) et un système de mesure de déplacement partie (A), caractérisé en ce que après avoir fixé le boulon (4) au filet de reception (7), si la roue tournante (13) ou, dans le cas où la roue tournante (13) serait arrêtée, la partie entière (B) est tournée, en fonction du degré de tension, il résulte une augmentation de pression entre la surface d'appui de la partie (B) (22) et la surface d'appui de la partie (A) (10), qui se répercute sur la plaque de mesure (8), laquelle en effectuant un parcours fixe jusqu'à la butée à l'interrupteur (11), déclenche un signal acoustique indiquant la fin du processus de mesure, à la suite duquel le degré respectif de tension du cordage de la raquette peut être lu directement sur l'échelle (2) de la partie (B), lequel est indiqué par un ressort étalonné (18) sur le degré de tension du cordage de la raquette avec l'ergot d'arrêt à flèche indicatrice (19).

2. Dispositif conforme à la revendication 1, caractérisé en ce que les surfaces d'appui du système de mesure de la pression B (22) et du système de mesure de déplacement A (10) possèdent des surfaces d'appui de grandeur différente qui permettent de mesurer à l'intérieur de l'ensemble du système de mesure par le creux (21) et par la plaque de mesure (8), indépendamment de la taille de la raquette et du degré de tension et indiquent par signal acoustique la valeur de mesure voulue qui peut être relevée sur l'échelle (2).

3. Dispositif conforme à la revendication 1, caractérisé en ce que la mesure du degré de tension du cordage de raquettes pour les diverses disciplines sportives est possible en remplaçant le ressort (18) ou le cylindre gradué entier (B).

4. Dispositif conforme à la revendication 1, caractérisé en ce que la plaque de mesure (8) se trouve dans un creux de la surface d'appui (10).

5. Dispositif conforme aux revendications 1 et 2, caractérisé en ce que dans la partie A, la roue tournante (13) est arrêtée ou manque totalement, après quoi le cylindre gradué B est entièrement utilisé comme unité de vissage par rotation qui est insérée dans un filet fixe dans la partie A, remplissant ainsi la fonction de la roue tournante (13).

6. Dispositif conforme aux revendications 1 et 2, caractérisé en ce qu'un dispositif mécanique à déclic est installé pour la détermination de la valeur mesurée à la place d'une signalisation électroacoustique.

7. Dispositif conforme à la revendication 1, caractérisé par l'utilisation d'un composant modulaire à la place du ressort (18) ou en association avec le ressort, lequel admet des mesures électroniques grace à la pression déclenchée par la mesure de la tension qui transmettent les valeurs mesurées à l'aide d'affichages électroniques correspondants connus.

8. Dispositif conforme à la revendication 1, caractérisé par l'utilisation d'un système de tension à culbuteur agissant sur le boulon tirant (4) à la place de la liaison de tension par rotation à la roue tournante (13).

9. Dispositif conforme aux revendications 1 et 8, caractérisé par un aimant fonctionnant comme système de tension par rotation entre A et B, à la place de la liaison de tension par rotation, comme dans la revendication 8.

10. Dispositif conforme aux revendications 1 à 9, caractérisé en ce qu'une résistance électrique changeable est appliquée en association avec la course variable du ressort (18) et affiche les rapports de pression et ainsi les degrés de tension du cordage de la raquette par affichage électronique analogique ou numérique.
